# EUROPEAN PATENT APPLICATION

(11) **EP 4 475 400 A1**
(43) Date of publication of application: **11.12.2024**
(21) Application number: 23746963.0
(22) Date of filing: 25.01.2023
(51) Int. Cl.: H02K 3/26

(54) **COIL SUBSTRATE, COIL SUBSTRATE FOR MOTOR, AND MOTOR**

(30) Priority: 31.01.2022 JP 2022012946
(71) Applicant: IBIDEN CO., LTD., Ogaki-shi, Gifu 503-8604 (JP)
(72) Inventor: HIRASAWA, Takahisa, Ogaki-shi, Gifu 503-8503 (JP); FURUNO, Takayuki, Ogaki-shi, Gifu 503-8503 (JP)
(74) Representative: Hoefer & Partner Patentanwälte mbB
(86) International application number: PCT/JP2023/002175
(87) International publication number: WO 2023/145752

(57) **Abstract**

Provided are a coil substrate with which a motor having stable performance can be obtained; a coil substrate for motors which is formed by using the coil substrate; and a motor formed by using the coil substrate for motors. The coil substrate comprises a flexible substrate having a first surface and a second surface opposite the first surface; and a plurality of coils formed by first wiring provided on the first surface and second wiring provided on the second surface. The coil substrate can be formed in a cylindrical shape in which the first surface is placed on the inner peripheral side and the second surface is placed on the outer peripheral side by being circumferentially wound about an axis extending, from a first end in the longitudinal direction of the flexible substrate as a start point, in a direction orthogonal to the longitudinal direction. The flexible substrate has a first region in the neighborhood of the first end, and a second region adjacent to the first region. The second wiring is formed in the first region, and the first wiring is not formed in the first region.

## Description

### [Technical Field]

The technology disclosed in the present specification relates to a coil board, a motor coil board formed by using the coil board, and a motor formed by using the motor coil board.

### [Background Art]

Patent Document 1 describes a coil board comprising a flexible board and spiral-shaped wiring formed on both surfaces of the flexible board. A motor coil board is formed by winding the coil board into a cylindrical shape. The coil board is wound multiple times in a circumferential direction about an axis extending in an orthogonal direction (width direction) orthogonal to a longitudinal direction of the flexible board, taking an edge at one end of the flexible board in the longitudinal direction as a starting end. A first face of the flexible board is arranged on an inner circumferential side, and a second face on the opposite side to the first face is arranged on an outer circumferential side

### [Prior Art Documents]

### [Patent Documents]

[Patent Document 1] JP 2020-182268 A

### [Summary of the Invention]

### [Problems in Patent Document 1]

In order to form coils on the coil board, first wiring constituting a half turn of one turn is sometimes formed on the first face of the flexible board, and second wiring constituting a remaining half turn is sometimes formed on the second face. In this case, the first wiring is formed in the vicinity of the starting end on the first face of the flexible board, while wiring is not formed in the vicinity of the starting end on the second face. When the coil board is wound into a cylindrical shape starting from the edge at the starting end and with the first face arranged on the inner circumferential side, it is therefore feasible that a situation will arise in which wiring is arranged on the inner circumferential side (first face side) in a first layer on the innermost circumference, but wiring is not arranged on the outer circumferential side (second face side). In this case, it is feasible that a second layer (i.e., the layer second from the inner circumference) of the flexible board outside the first layer will be wound outside a region where no wiring is formed on the outer circumferential side of the first layer. It is feasible that a space will be formed between the first layer and the second layer as a result.

When there is a space on the inside of the motor coil board, it is feasible that the motor coil board might be formed in a polygonal cylinder shape having a polygonal cross section, rather than a cylindrical shape with a circular cross section. This may produce short-circuiting between wiring as a result. Furthermore, it is feasible that there will be interference with a magnet which is arranged on the inside, when a motor is formed by arranging the motor coil board, the magnet, and a yoke inside a housing. Furthermore, it is feasible that there will be a reduction in heat dissipation because the space between the motor coil board and the yoke increases, and stable motor performance may not be demonstrated.

### [Means for Solving the Problems]

A coil board according to the present invention comprises: a flexible board having a first face and a second face on the opposite side to the first face; and a plurality of coils formed by means of first wiring provided on the first face and second wiring provided on the second face. The coil board is wound in a circumferential direction about an axis extending in an orthogonal direction orthogonal to a longitudinal direction of the flexible board, starting from a first end of the flexible board in the longitudinal direction, and can thereby be formed into a cylindrical shape in which the first face is arranged on the inner circumferential side and the second face side is arranged on the outer circumferential side. The flexible board has a first region in the vicinity of the first end, and a second region next to the first region. The second wiring is formed within the first region, and the first wiring is not formed within the first region.

When the coil board according to the present invention is wound in the circumferential direction starting from the first end and formed into a cylindrical shape, the first region forms a first layer on the innermost circumference. The first wiring is not formed on the first face within the first region, and the second wiring is formed on the second face within the first region. Consequently, when the coil board is formed into a cylindrical shape, there is no wiring (first wiring) arranged on the inner circumferential side (first face side) in the first layer (first region) on the innermost circumference, and wiring (second wiring) is arranged only on the outer circumferential side (second face side). A region in which no wiring is arranged on the outer circumferential side (second face side) of the first layer is not formed. Formation of a space between the first layer and the second layer (i.e., the layer second from the inner circumference) of the flexible board is therefore suppressed even when the second layer is wound on the outside of the first layer. Furthermore, when a motor coil board is formed by winding the coil board according to the present invention in the circumferential direction, the motor coil board is formed into a cylindrical shape with a substantially completely circular cross section. Short-circuiting between wiring is suppressed as a result. Interference is prevented between the motor coil board and a magnet which is arranged on the inside of the motor coil board when a motor is formed by arranging the motor coil board, the magnet, and a yoke inside a housing. Furthermore, high heat dissipation is achieved because the space between the motor coil board and the yoke is constant. When a motor is formed by using the coil board according to the present invention, a motor having stable performance can be obtained as a result.

In the coil board according to the present invention, the flexible board may further comprise a third region next to the second region and in the vicinity of a second end on the opposite side to the first end. The first wiring may be formed within the third region. The second wiring need not be formed within the third region.

In the coil board according to the present invention, the plurality of coils may each comprise: half-turns of the first wiring formed on the first face; half-turns of the second wiring formed on the second face; and via conductors connecting the first wiring and the second wiring.

A motor coil board according to the present invention is formed by winding the coil board according to the present invention into a cylindrical shape. The coil board is wound about the axis starting from the first end, the first face is arranged on the inner circumferential side, and the second face is arranged on the outer circumferential side.

The motor coil board according to the present invention can be formed with a substantially completely circular cross section. Interference between the magnet and the motor coil board when a motor is formed is prevented. High heat dissipation is achieved. When a motor is formed by using the motor coil board according to the present invention, a motor having stable performance can therefore be obtained.

A motor according to the present invention is formed by arranging the motor coil board according to the present invention on the inside of a cylindrical yoke, and arranging a rotary shaft and a magnet on the inside of the motor coil board.

Interference between the magnet and the motor coil board is prevented in the motor according to the present invention. Furthermore, high heat dissipation is achieved because the space between the motor coil board and the yoke is constant. A motor having stable performance is obtained.

### [Brief Description of the Drawings]

[Fig. 1] is a plan view schematically showing a coil board according to an embodiment.
[Fig. 2] is a view in cross section schematically showing the coil board according to an embodiment.
[Fig. 3] is an oblique view schematically showing a motor coil board according to an embodiment.
[Fig. 4] is an illustrative diagram in cross section schematically showing a portion of the motor coil board according to an embodiment.
[Fig. 5] is a view in cross section schematically showing a motor according to an embodiment.

### [Embodiment of the Invention]

### [Embodiment]

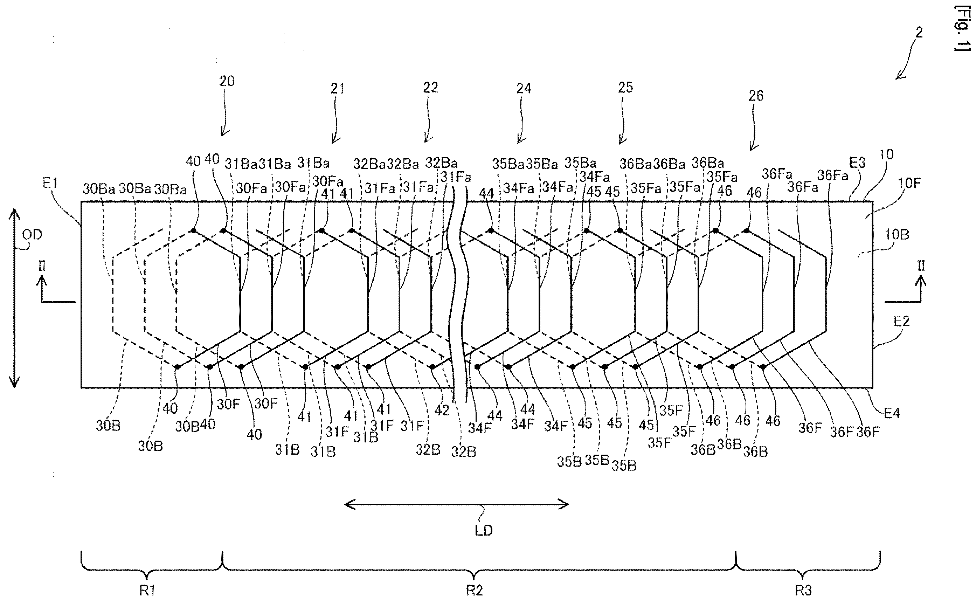

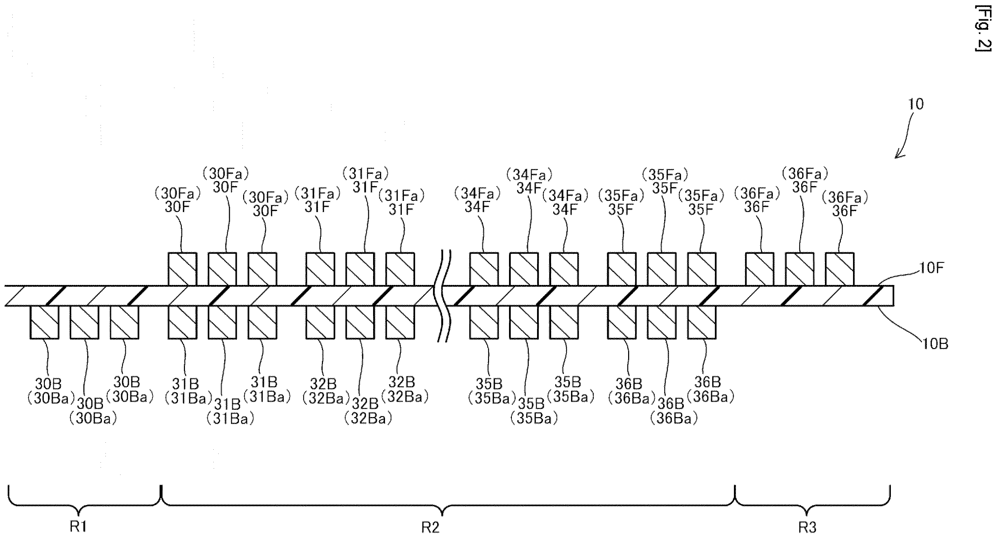

Fig. 1 is a plan view showing a coil board 2 according to an embodiment. Fig. 2 is a view in the cross section II-II in fig. 1. As shown in fig. 1, the coil board 2 comprises a flexible board 10, and a plurality of coils 20, 21, 22, 24, 25, 26. Fig. 1 shows only the coils 20, 21, 22, 24, 25, 26, but the coil board 2 may also comprise coils other than the coils 20, 21, 22, 24, 25, 26.

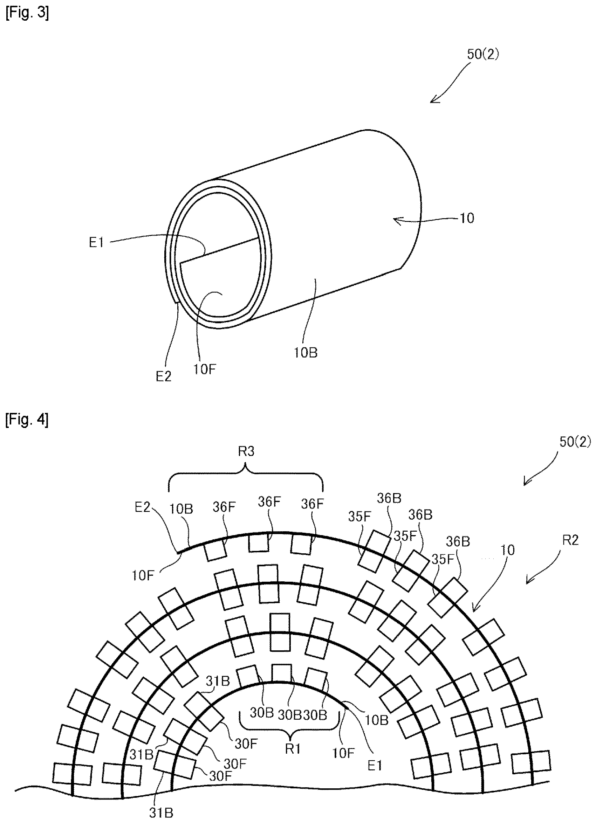

The flexible board 10 is a resin board comprising the first face 10F and the second face 10B on the opposite side to the first face 10F. The flexible board 10 is formed by using an insulating resin such as polyimide or polyamide. The flexible board 10 is capable of flexing. The flexible board 10 is formed in a rectangular shape with four edges, which are a first edge E1 to a fourth edge E4. The first edge E1 is a short edge at one end of the flexible board 10 in a longitudinal direction (direction of the arrow LD in fig. 1). The second edge E2 is a short edge at the other end in the longitudinal direction. The first edge E1 and the second edge E2 are both short edges extending along an orthogonal direction (direction of the arrow OD in fig. 1) which is orthogonal to the longitudinal direction. The third edge E3 and the fourth edge E4 are both long edges extending along the longitudinal direction. As will be described in detail later, when the coil board 2 is wound into a cylindrical shape to form the motor coil board 50 (see fig. 3), the first face 10F is arranged on an inner circumferential side and the second face 10B is arranged on an outer circumferential side.

A middle part of the flexible board 10 in the longitudinal direction has been omitted from fig. 1 and 2. The flexible board 10 has a first region R1 in the vicinity of the first edge E1, a second region R2 next to the first region R1, and a third region R3 next to the second region R2 and in the vicinity of the second edge E2. The second region R2 is a region between the first region R1 and the third region R3.

The coils 20, 21, 22, 24, 25, 26 are aligned along the longitudinal direction of the flexible board 10. The coils 20, 21, 22 and the coils 24, 25, 26 may respectively constitute a U phase, V phase and W phase of a three-phase motor. The coils 20, 21, 22, 24, 25, 26 are aligned in that order from the first edge E1 toward the second edge E2. Other coils which are not depicted are provided between the coils 20, 21, 22 and the coils 24, 25, 26. The coils are formed by means of first wiring (see the reference symbols 30F, 31F, etc. in fig. 1) provided on the first face 10F, and second wiring (see the reference symbols 30B, 31B, etc.) provided on the second face 10B.

In order to form the coil 20, second wiring 30B constituting a half turn of one turn is formed on the second face 10B side, first wiring 30F constituting a remaining half turn is formed on the first face 10F side, and adjacent turns are arranged offset from each other. In fig. 1, the coil 20 comprises three turns of wiring. The first wiring 30F and the second wiring 30B constituting each turn are electrically connected through via conductors 40 penetrating the flexible board 10. The first wiring 30F has first orthogonal portions 30Fa extending along the orthogonal direction (see the arrow OD). The second wiring 30B also has second orthogonal portions 30Ba extending along the orthogonal direction. The coil 20 is formed along the first region R1 and the second region R2 of the flexible board 10. The second wiring 30B is formed within the first region R1. The first wiring 30F is not formed within the first region R1. The first wiring 30F is formed within the second region R2.

In the same way, in order to form the coil 21, second wiring 31B constituting a half turn of one turn is formed on the second face 10B side, first wiring 31F constituting a remaining half turn is formed on the first face 10F side, and adjacent turns are arranged offset from each other. The coil 21 comprises three turns of wiring. The first wiring 31F and the second wiring 31B constituting each turn are electrically connected through via conductors 41. The first wiring 31F has first orthogonal portions 31Fa extending along the orthogonal direction (see the arrow OD). The second wiring 31B also has second orthogonal portions 31Ba extending along the orthogonal direction. The whole of the coil 21 is formed within the second region R2 of the flexible board 10. That is to say, the first wiring 31F and the second wiring 31B are formed within the second region R2.

In the same way, the coil 22 also comprises three turns of second wiring 32B and first wiring (not depicted). The second wiring 32B and the first wiring are connected through via conductors 42. The first wiring has first orthogonal portions, and the second wiring 32B has second orthogonal portions 32Ba. The whole of the coil 22 is also formed within the second region R2 of the flexible board 10.

As shown in fig. 1 and 2, the first orthogonal portions 30Fa of the first wiring 30F constituting the coil 20 overlap, through the flexible board 10, the second orthogonal portions 31Ba of the second wiring 31B constituting the adjacent coil 21. The first orthogonal portions 31Fa of the first wiring 31F constituting the coil 21 overlap, through the flexible board 10, the second orthogonal portions 32Ba of the second wiring 32B constituting the adjacent coil 22.

The coil 24 also comprises three turns of second wiring (not depicted) and first wiring 34F. The second wiring and the first wiring 34F are connected through via conductors 44. The first wiring 34F has first orthogonal portions 34Fa, and the second wiring has second orthogonal portions. The whole of the coil 24 is also formed within the second region R2 of the flexible board 10.

The coil 25 also comprises three turns of second wiring 35B and first wiring 35F. The second wiring 35B and the first wiring 35F are connected through via conductors 45. The first wiring 35F has first orthogonal portions 35Fa, and the second wiring 35B has second orthogonal portions 35Ba. The whole of the coil 25 is also formed within the second region R2 of the flexible board 10.

The coil 26 also comprises three turns of second wiring 36B and first wiring 36F. The second wiring 36B and the first wiring 36F are connected through via conductors 46. The first wiring 36F has first orthogonal portions 36Fa, and the second wiring 36B has second orthogonal portions 36Ba. The coil 26 is formed along the second region R2 and the third region R3 of the flexible board 10. The second wiring 36B is formed within the second region R2. The first wiring 36F is formed within the third region R3. The second wiring 36B is not formed within the third region R3.

The first orthogonal portions 34Fa of the first wiring 34F constituting the coil 24 overlap, through the flexible board 10, the second orthogonal portions 35Ba of the second wiring 35B constituting the adjacent coil 25. The first orthogonal portions 35Fa of the first wiring 35F constituting the coil 25 overlap, through the flexible board 10, the second orthogonal portions 36Ba of the second wiring 36B constituting the adjacent coil 26.

The arrangement in fig. 1 and 2 is purely an example. In another modified example, the first orthogonal portions 30Fa of the first wiring 30F constituting the coil 20 need not overlap the second orthogonal portions 31Ba of the second wiring 31B constituting the immediately adjacent coil 21, provided that they overlap the second orthogonal portions of second wiring constituting another coil (e.g., the second orthogonal portions of the second wiring of the coil three along). The same also applies to the coils 21, 22, 24, 25, 26. Whichever configuration is adopted, the second wiring 30B, 31B, etc. is formed within the first region R1, and the first wiring 30F, 31F, etc. should not be formed within the first region R1. The first wiring 36F, 35F, etc. is formed within the third region R3, and the second wiring 36B, 35B, etc. should not be formed within the third region R3.

The first face 10F and the first wiring 30F, etc. are covered by a resin insulating layer, although this is not shown in the drawings. The second face 10B and the second wiring 30B, etc. are likewise covered by a resin insulating layer.

Fig. 3 is an oblique view schematically showing a motor coil board 50 employing the coil board 2 (fig. 1 and 2) of the embodiment. As shown in fig. 3, the motor coil board 50 for a motor is formed by winding the coil board 2 (fig. 1 and 2) of the embodiment into a cylindrical shape. When wound into a cylindrical shape, the coil board 2 is wound multiple times in the circumferential direction about an axis extending in the orthogonal direction (an axis extending parallel to the first edge E1 (see fig. 1)), starting from the first edge E1. Furthermore, the number of times that the coil board is wound is not particularly limited. The coil 2 is wound four times in the example of fig. 3. The first face 10F of the flexible board 10 is arranged on the inner circumferential side, and the second face 10B is arranged on the outer circumferential side when the coil board 2 is wound into a cylindrical shape.

Fig. 4 is an illustrative diagram in cross section schematically showing a portion of the motor coil board 50 in fig. 3. As shown in the drawing, the first region R1 and a portion of the second region R2 form the first layer on the innermost circumference of the motor coil board 50. A portion of the second region R2 and the third region R3 form the fourth layer on the outermost circumference.

The first wiring 30F provided on the first face 10F is not formed within the first region R1 in the vicinity of the starting end when the coil board 2 is wound, and only the second wiring 30B, which is provided on the second face 10B, is formed in that region. Consequently, as shown in fig. 4, there is no wiring arranged on the inner circumferential side (first face 10F side) in the first region R1 part of the first layer on the innermost circumference, and wiring (second wiring 30B) is arranged only on the outer circumferential side (second face 10B side). A region in which no wiring is arranged on the outer circumferential side of the first layer is not formed. Formation of a space between the first layer and the second layer (i.e., the layer second from the inner circumference) of the flexible board 10 is therefore suppressed even when the second layer is wound on the outside of the first layer. When the motor coil board 50 is formed by winding the coil board 2 of the embodiment in the circumferential direction, the motor coil board 50 can therefore be formed into a cylindrical shape with a substantially completely circular cross section. Short-circuiting between the wiring is therefore suppressed.

Furthermore, only the first wiring 36F provided on the first face 10F is formed within the third region R3 in the vicinity of the terminal end when the coil board 2 is wound, and the second wiring 36B provided on the second face 10B is not formed in that region. Consequently, as shown in fig. 4, there is no wiring arranged on the outer circumferential side (second face 10B side) in the third region R3 part of the fourth layer on the outermost circumference, and wiring (first wiring 36F) is arranged only on the inner circumferential side (first face 10F side). A region in which no wiring is arranged on the inner circumferential side of the fourth layer is not formed. Formation of a space between the third layer and the fourth layer is therefore also suppressed. The motor coil board 50 can be formed into a cylindrical shape with a substantially completely circular cross section.

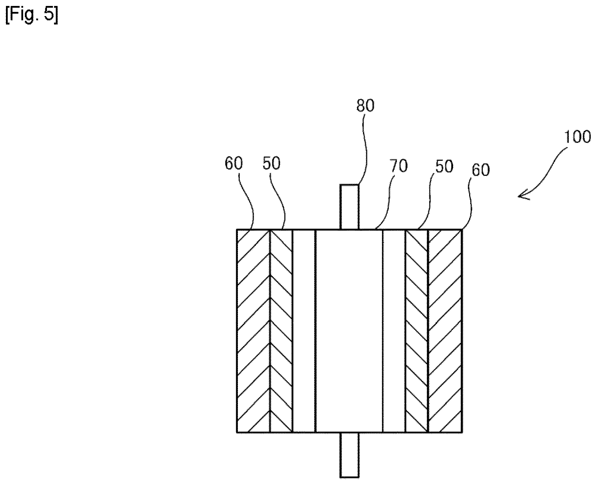

Fig. 5 is a view in cross section schematically showing a motor 100 employing the motor coil board 50 (fig. 3 and 4) of the embodiment. The motor 100 is formed by arranging the motor coil board 50 on the inside of a yoke 60, and arranging a rotary shaft 80 and a magnet 70, which is fixed to the rotary shaft 80, on the inside of the motor coil board 50.

The configurations of the coil board 2 (fig. 1 and 2), the motor coil board 50 (fig. 3 and 4), and the motor 100 (fig. 5) of the embodiment are as described above. By using the coil board 2 of the embodiment, the motor coil board 50 can be formed into a cylindrical shape with a substantially completely circular cross section. Interference is therefore prevented between the motor coil board 50 and the magnet 70 which is arranged on the inside of the motor coil board 50 when the motor 100 is formed. Furthermore, high heat dissipation is achieved because the space between the motor coil board 50 and the yoke 60 is constant. When the motor 100 is formed by using the coil board 2 of the embodiment, a motor 100 having stable performance can therefore be obtained.

### [Modified example of the embodiment]

In the modified example, the arrangement of the wiring constituting the coils 20, 21, 22, 24, 25, 26, etc. differs from that of the embodiment. The first wiring 30F and the second wiring 30B constituting the coil 20 are formed in a spiral shape (hexagonal spiral shape) in the modified example, although this is not shown in the drawings. The first wiring 30F and the second wiring 30B are connected through via conductors. The first wiring 30F and the second wiring 30B are arranged with an offset. The coils 21, 22, 24, 25, 26, etc. also have the same configuration.

In the modified example also, the second wiring (wiring on the second face 10B side) is formed within the first region R1, and the first wiring (wiring on the first face 10F side) is not formed within the first region R1. The first wiring is formed within the third region R3, and the second wiring is not formed within the third region R3.

Consequently, when the motor coil board 50 is formed by winding the coil board 2 of the modified example also, there is no wiring arranged on the inner circumferential side (first face 10F side) in the first region R1 part of the first layer, and wiring (second wiring) is arranged only on the outer circumferential side (second face 10B side). A region in which no wiring is arranged on the outer circumferential side of the first layer is not formed. Formation of a space between the first layer and the second layer is therefore suppressed even when the second layer of the flexible board 10 is wound on the outside of the first layer. Furthermore, there is no wiring arranged on the outer circumferential side (second face 10B side) in the third region R3 part of the fourth layer on the outermost circumference, and wiring (first wiring) is arranged only on the inner circumferential side (first face 10F side). A region in which no wiring is arranged on the inner circumferential side of the fourth layer is not formed. Formation of a space between the third layer and the fourth layer is therefore also suppressed. The motor coil board 50 can be formed into a cylindrical shape with a substantially completely circular cross section.

### [Key to Symbols]

2: Coil board
10: Flexible board
10F: First face
10B: Second face
20, 21, 22, 24, 25, 26: Coil
30F, 31F, 32F, 34F, 35F, 36F: First wiring
30Fa, 31Fa, 32Fa, 34Fa, 35Fa, 36Fa: First orthogonal portion
30B, 31B, 32B, 34B, 35B, 36B: Second wiring
30Ba, 31Ba, 32Ba, 34Ba, 35Ba, 36Ba: Second orthogonal portion
50: Motor coil board
60: Yoke
70: Magnet
80: Rotary shaft
100: Motor
102: Coil board
R1: First region
R2: Second region
R3: Third region

## Claims

1. A coil board comprising: a flexible board having a first face and a second face on the opposite side to the first face; and
a plurality of coils formed by means of first wiring provided on the first face and second wiring provided on the second face, wherein
the coil board is wound in a circumferential direction about an axis extending in an orthogonal direction orthogonal to a longitudinal direction of the flexible board, starting from a first end of the flexible board in the longitudinal direction, and can thereby be formed into a cylindrical shape in which the first face is arranged on the inner circumferential side and the second face side is arranged on the outer circumferential side,
the flexible board has a first region in the vicinity of the first end, and a second region next to the first region, and
the second wiring is formed within the first region, and the first wiring is not formed within the first region.

2. The coil board of claim 1, wherein the flexible board further comprises a third region next to the second region and in the vicinity of a second end on the opposite side to the first end, the first wiring is formed within the third region, and the second wiring is not formed within the third region.

3. The coil board of claim 1, wherein the plurality of coils each comprise: half-turns of the first wiring formed on the first face; half-turns of the second wiring formed on the second face; and via conductors connecting the first wiring and the second wiring.

4. A motor coil board formed by winding the coil board of claim 1 in a circumferential direction, wherein the coil board is wound about the axis starting from the first end, the first face is arranged on the inner circumferential side, and the second face is arranged on the outer circumferential side.

5. A motor which is formed by arranging the motor coil board of claim 4 on the inside of a cylindrical yoke, and arranging a rotary shaft and a magnet on the inside of the motor coil board.
